# EUROPÄISCHE PATENTSCHRIFT

(11) **EP 2 944 551 B1**
(45) Veröffentlichungstag und Bekanntmachung des Hinweises auf die Patenterteilung: **01.02.2017**
(21) Anmeldenummer: 15000820.9
(22) Anmeldetag: 19.03.2015
(51) Int. Cl.: B62D 25/24, B62D 33/06, B60J 5/04, B60R 11/00

(54) **Fahrerhausseitenwand mit Staukasten**
Driver's cabin side wall with a stowage compartment
Paroi latérale d'une cabine de conducteur de véhicule avec espace de rangement

(30) Priorität: 17.05.2014 DE 102014007301
(43) Veröffentlichungstag der Anmeldung: 18.11.2015
(73) Patentinhaber: MAN Truck & Bus AG, 80995 München (DE)
(72) Erfinder: Polzer, Andreas, 88131 Lindau (DE)
(74) Vertreter: v. Bezold & Partner Patentanwälte - PartG mbB

(56) Entgegenhaltungen:
- WO-A1-2010/076591
- DE-A1-102009 036 256
- JP-U- S6 428 345

## Beschreibung

Die Erfindung betrifft eine Seitenwand für eine Fahrerkabine eines Nutzfahrzeugs, insbesondere eines Lastkraftwagens, mit einer Fahrerhaustüre und einem seitlich neben der Fahrerhaustüre angeordneten Staukasten.

Die gattungsgemäße DE 10 2009 036 256 A1 offenbart eine solche Seitenwand.

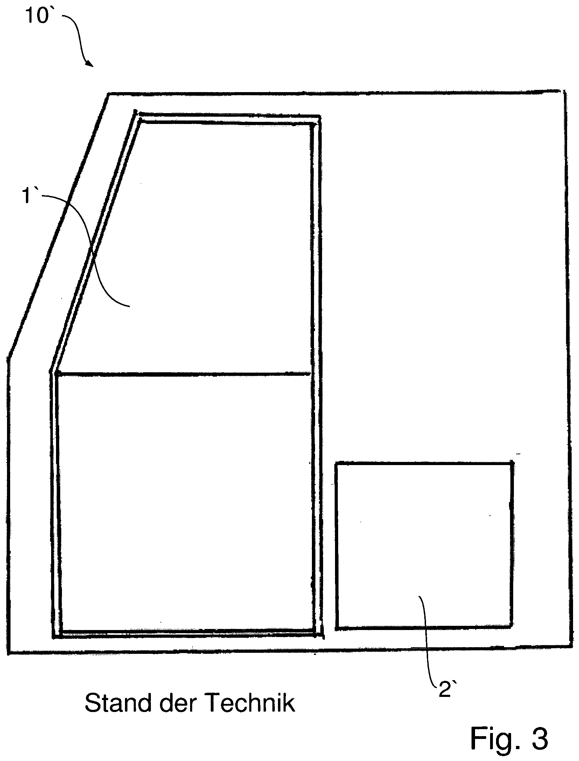

Figur 3 zeigte eine schematische Darstellung einer aus der Praxis bekannten Fahrerhausseitenwand 10'. Seitlich neben der Fahrerhaustüre 1' ist ein Staukasten 2' angeordnet, der zum Verstauen von Ladegut dient und von außerhalb des Fahrerhauses zugänglich ist. Der Staukasten 2' weist ein mindestens einstufiges Schloss mit dazugehörigem Schließbolzen auf, der mittels eines Bowdenzugs entriegelbar ist, woraufhin der Staukasten 2' geöffnet werden kann. Nachteilhaft an dem Staukästen 2' ist insbesondere, dass er zum Verriegeln ein mindestens einstufiges Schloss nebst dazugehörigem Schließbolzen erfordert und zusätzlich einen Bowdenzug zum Entriegeln desselben.

Eine Aufgabe der Erfindung ist es, einen verbesserten und/oder alternativen Staukasten für eine Fahrerhausseitenwand zu schaffen, insbesondere einen Staukasten, der einfach, aber dennoch zuverlässig absperrbar ist.

Diese Aufgabe kann mit den Merkmalen des unabhängigen Anspruchs gelöst werden. Vorteilhafte Weiterbildungen können den Unteransprüchen und der folgenden Beschreibung entnommen werden.

Die Erfindung schafft eine Seitenwand, insbesondere eine Seitenaußenwand für ein Fahrerhaus eines Nutzfahrzeugs, z. B. eines Lastkraftwagens. Die Seitenwand umfasst eine zweckmäßig auf- und zuschwenkbare Fahrerhaustüre und einen in Breitenrichtung der Seitenwand neben und somit seitlich neben der Fahrerhaustüre angeordneten Staukasten, der zweckmäßig von außerhalb des Fahrerhauses zugänglich ist, zum Verstauen von Ladegut (z. B. Werkzeuge, Handschuhe, etc.) dient und eine insbesondere auf- und zuschwenkbare Staukastenaußenwand zum Öffnen und Schließen des Staukastens aufweist.

Die Seitenwand zeichnet sich insbesondere dadurch aus, dass die Fahrerhaustüre die Staukastenaußenwand zweckmäßig abschnittsweise seitlich überdeckt und damit gegen ein Öffnen sichert und/oder blockiert (z. B. verriegelt), wenn die Fahrerhaustüre und der Staukasten im geschlossenen Zustand sind.

Die Fahrerhaustüre dient also zweckmäßig dazu, die Öffnungsbewegung der Staukastenaußenwand zu blockieren. Insbesondere kann die Fahrerhaustüre unmittelbar oder mittelbar mit der Staukastenaußenwand so in Eingriff gelangen, dass die Öffnungsbewegung der Staukastenaußenwand gesperrt und/oder blockiert wird.

Dadurch kann die ohnehin vorhandene Fahrerhaustüre genutzt werden, den Staukasten gegen ein unerlaubtes Öffnen zu sichern (z. B. zu verriegeln oder zu blockieren).

Der Staukasten umfasst somit insbesondere kein eigenes Schloss, ist aber dennoch absperrbar. Darüber hinaus ist zum Entsperren kein Bowdenzug vorhanden. Das führt zu einer Kostensenkung und zu Packagevorteilen durch den Entfall letztgenannter Teile.

Bei einer besonders bevorzugten Ausführungsform überdeckt in geschlossenem Zustand der Fahrerhaustüre und der Staukastenaußenwand ein seitlicher Türflansch einen Teil der Staukastenaußenwand, um sie dadurch abzusperren (z. B. abzuriegeln).

Die Staukastenaußenwand ist vorzugsweise eine Staukastenaußenklappe. Insbesondere ist die Staukastenaußenwand zum Öffnen und zweckmäßig Schließen des Staukastens um eine sich in Höhenrichtung (Vertikalrichtung) der Seitenwand erstreckenden Schwenkachse schwenkbar. Die Schwenkachse ist zweckmäßig an der der Fahrerhaustüre abgewandten Seite des Staukastens angeordnet. Dadurch entsteht im geschlossenen Zustand ein großer Hebelarm zwischen Fahrerhaustüre und Schwenkachse, wodurch ein Aufbrechen der Staukastenaußenwand erschwert wird.

Die Staukastenaußenwand ist vorzugsweise in der Seitenwand angeordnet, z. B. im Wesentlichen bündig oder fluchtend dazu oder nach hinten versetzt.

Der Staukasten ist zweckmäßig über eine seitlich neben der Fahrerhaustüre in der Seitenwand ausgeführte Öffnung zugänglich.

Der Staukasten ist insbesondere von außerhalb des Fahrerhauses aus zugänglich und stellt somit zweckmäßig einen Außenstaukasten dar.

Es ist möglich, dass die Staukastenaußenwand relativ zur Seitenwand verschwenkbar ist.

In geschlossenem Zustand der Fahrerhaustüre und der Staukastenaußenwand ragt die Staukastenseitenwand vorzugsweise bis zu einem seitlichen Türflansch und darüber hinaus.

Die Staukastenaußenwand ist vorzugsweise mit einem seitlichen Hintergreifungsabschnitt versehen, der von einem zweckmäßig seitlichen Türflansch überdeckt und dadurch verriegelt wird, wenn die Fahrerhaustüre und der Staukasten in geschlossenem Zustand sind.

Der Hintergreifungsabschnitt ragt vorzugsweise von der Staukastenaußenwand nach hinten, um die Fahrerhaustüre, insbesondere den seitlichen Türflansch, zu hintergreifen, wenn die Fahrerhaustüre und die Staukastenaußenwand in geschlossenem Zustand sind.

Vorzugsweise bildet im geschlossenen Zustand der Fahrerhaustüre und der Staukastenaußenwand der Hintergreifungsabschnitt zusammen mit dem Türflansch einen sperrenden (z. B. verriegelnden oder blockierenden) Überdeckungs- oder Überlappungsbereich zwischen Fahrerhaustüre und Staukastenaußenwand.

Im geschlossenen Zustand der Fahrerhaustüre und der Staukastenaußenwand sind ein Randbereich der Außenfläche der Staukastenaußenwand und ein Randbereich der Außenfläche der Fahrerhaustüre und/oder der Seitenwand vorzugsweise mit einem Versatz von weniger als 10mm, weniger als 5mm oder sogar weniger als 3mm zueinander ausgerichtet. Dadurch kann ein im Wesentlichen bündiger oder fluchtender Übergang erzeugt und somit eine optisch ansprechende Seitenwand-Gesamtaußenfläche geschaffen werden.

Zu erwähnen ist, dass die Fahrerhaustüre zweckmäßig dazu dient, den Fahrereingang in das Fahrerhaus zu öffnen und zu schließen.

Zu erwähnen ist ferner, dass die Staukastenaußenwand zweckmäßig dazu dient, den Staukasten vorzugsweise mittels Verschwenkens um eine z. B. im Wesentlichen vertikale Schwenkachse zu öffnen und zu schließen.

Zu erwähnen ist außerdem, dass die Staukastenaußenwand insbesondere eine Staukastenaußenklappe ist.

Die Erfindung ist nicht auf eine Seitenwand beschränkt, sondern umfasst auch ein Fahrerhaus für ein Nutzfahrzeug, vorzugsweise einen Lastkraftwagen, mit einer Seitenwand wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht einer Seitenwand gemäß einer Ausführungsform der Erfindung,
- Figur 2: zeigt eine Schnittansicht entlang Linie A-A aus Figur 1, und
- Figur 3: zeigt eine Fahrerhausseitenwand gemäß Stand der Technik.

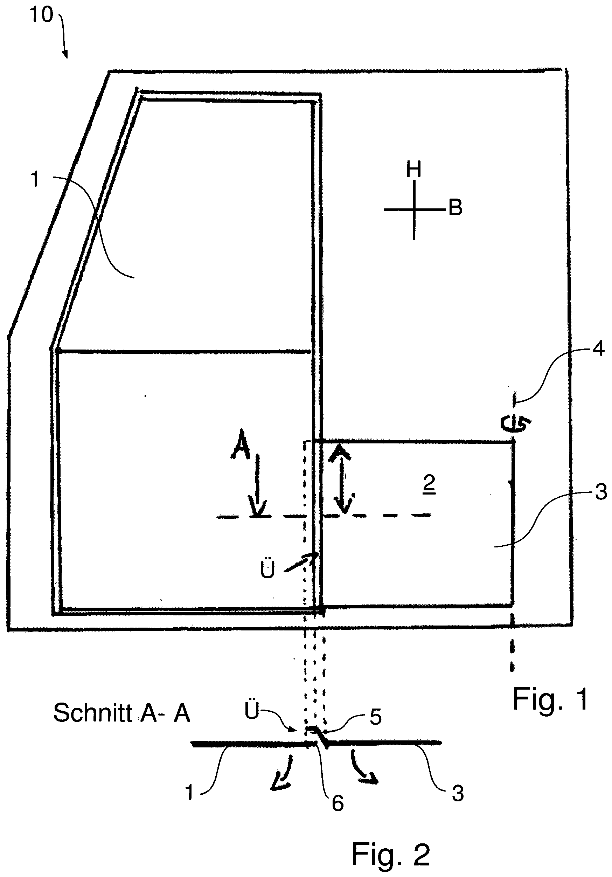

Figur 1 zeigt eine Seitenansicht einer Seitenwand 10 gemäß einer Ausführungsform der Erfindung, während Figur 2 eine Schnittansicht entlang Linie A-A aus Figur 1 zeigt. Die Seitenwand 10 wird nachfolgend unter Bezugnahme auf die Figuren 1 und 2 beschrieben.

Die Seitenwand 10 umfasst eine Fahrerhaustüre 1 und einen Staukasten 2. Der Staukasten 2 ist in Breitenrichtung B der der Seitenwand 10 seitlich neben der Fahrerhaustüre 1 angeordnet. Der Staukasten 2 ist von außerhalb des Fahrerhauses zugänglich, stellt somit einen Außenstaukasten dar, dient zum Verstauen von Ladegut (z. B. Werkzeug, Handschuhe, etc.) und umfasst eine Staukastenaußenwand 3, mittels der der Staukasten 2 geöffnet und geschlossen werden kann. Die Staukastenaußenwand 3 ist in der Seitenwand 10 angeordnet, im geschlossenen Zustand z. B. im Wesentlichen bündig oder fluchtend dazu oder relativ dazu zumindest geringfügig nach hinten versetzt. Die Staukastenaußenwand 3 ist als Staukastenaußenklappe ausgeführt.

Die Fahrerhaustüre 1 und der Staukasten 2 sind so ausgeführt und angeordnet, dass die Fahrerhaustüre 1 die Staukastenaußenwand 3 seitlich überdeckt und dadurch sperrt und blockiert, um ein unerlaubtes Öffnen der Staukastenaußenwand 3 zu verhindern. Im Rahmen der Erfindung kommt also die Fahrerhaustüre 1, insbesondere deren seitlicher Türflansch 6, unmittelbar oder mittelbar mit der Staukastenaußenwand 3 so in Eingriff, dass die Staukastenaußenwand 3 nicht geöffnet werden kann.

Figur 1 zeigt die Fahrerhaustüre 1 und den Staukasten 2 bzw. die Staukastenaußenwand 3 in einem geschlossenen Zustand. Soll die Staukastenaußenwand 3 geöffnet werden, muss zunächst die Fahrerhaustüre 1 geöffnet werden, wodurch die Staukastenaußenwand 3 entsperrt und somit öffenbar wird und dadurch Zugang in den Staukasten 2 erlangt werden kann.

Die Staukastenaußenwand 3 weist zum Öffnen und zweckmäßig Schließen des Staukastens 2 eine sich in Höhenrichtung H der Seitenwand 10 erstreckende Schwenkachse 4 (zum Beispiel Scharnierachse) auf. Um diese Schwenkachse 4 kann die Staukastenaußenwand 3 zum Öffnen auswärts geschwenkt werden und zum Schließen einwärts geschwenkt werden. Die Schwenkachse 4 ist an der der Fahrerhaustüre 1 abgewandten Seite der Staukastenaußenwand 3 angeordnet. Dadurch entsteht zwischen dem im geschlossenen Zustand blockierenden Türflansch 6 und der Schwenkachse 4 ein großer Hebelarm, was ein Aufbrechen der Staukastenaußenwand 3 erschwert.

Die Staukastenaußenwand 3 weist einen Hintergreifungsabschnitt 5 auf, der von der Staukastenaußenwand 3 nach hinten ragt, also in Figur 1 in die Zeichenebene hinein, um die Fahrerhaustüre 1 zu hintergreifen. Im geschlossenen Zustand der Fahrerhaustüre 1 und der Staukastenaußenwand 3 wird der Hintergreifungsabschnitt 5 durch den seitlichen Türflansch 6 überdeckt und dadurch verriegelt. Der Hintergreifungsabschnitt 5 bildet somit zusammen mit dem Türflansch 6 einen absperrenden Überdeckungs-/Überlappungsbereich Ü zwischen Fahrerhaustüre 1 und Staukastenaußenwand 3, wenn Fahrerhaustüre 1 und Staukastenaußenwand 3 geschlossen sind.

Der Figur 2 kann darüber hinaus entnommen werden, dass im geschlossenen Zustand die Staukastenaußenwand 3 und die Fahrerhaustüre 1 und vorzugsweise ebenso die Fahrerhausseitenwand 10 vorzugsweise im Wesentlichen bündig oder fluchtend ineinander übergehen, vorzugsweise mit einem Versatz von kleiner 5 mm.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deswegen in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Fahrerhaustüre
- 2: Staukasten
- 3: Staukastenaußenwand
- 4: Schwenkachse
- 5: Hintergreifungsabschnitt
- 6: Türflansch
- Ü: Überdeckungs-/Überlappungsbereich
- B: Breitenrichtung der Seitenwand und der Fahrerhaustüre
- H: Höhenrichtung der Seitenwand und der Fahrerhaustüre
- 10: Seitenwand

## Patentansprüche

1. Seitenwand (10) für ein Fahrerhaus eines Nutzfahrzeugs, mit einer Fahrerhaustüre (1) und einem seitlich neben der Fahrerhaustüre (1) angeordneten Staukasten (2), der zweckmäßig von außerhalb des Fahrerhauses zugänglich ist, der zum Verstauen von Ladegut dient und eine vorzugsweise verschwenkbare Staukastenaußenwand (3) aufweist, **dadurch gekennzeichnet, dass** in geschlossenem Zustand der Fahrerhaustüre (1) und der Staukastenaußenwand (3) die Fahrerhaustüre (1) die Staukastenaußenwand (3) abschnittsweise überdeckt und damit gegen ein Öffnen sichert oder blockiert.

2. Seitenwand (10) nach Anspruch 1, **dadurch gekennzeichnet, dass** die Staukastenaußenwand (3) eine Staukastenaußenklappe ist.

3. Seitenwand (10) nach Anspruch 1 oder 2, **dadurch gekennzeichnet, dass** die Staukastenaußenwand (3) zum Öffnen des Staukastens (2) um eine sich in Höhenrichtung (H) der Seitenwand (10) erstreckende Schwenkachse (4) schwenkbar ist.

4. Seitenwand (10) nach einem der vorhergehenden Ansprüche, **dadurch gekennzeichnet, dass** die Staukastenaußenwand (3) in der Seitenwand (10) angeordnet ist und/oder der Staukasten (2) von außen zugänglich ist.

5. Seitenwand (10) nach einem der vorhergehenden Ansprüche, **dadurch gekennzeichnet, dass** die Staukastenaußenwand (3) relativ zur Seitenwand (10) verschwenkbar ist.

6. Seitenwand (10) nach einem der vorhergehenden Ansprüche, **dadurch gekennzeichnet, dass** in geschlossenem Zustand der Fahrerhaustüre (1) und der Staukastenaußenwand (3) die Staukastenaußenwand (3) bis zu einem seitlichen Türflansch (6) ragt und darüber hinaus.

7. Seitenwand (10) nach einem der vorhergehenden Ansprüche, **dadurch gekennzeichnet, dass** die Staukastenaußenwand (3) mit einem Hintergreifungsabschnitt (5) versehen ist, der von einem seitlichen Türflansch (6) im geschlossen Zustand überdeckt und somit verriegelt wird.

8. Seitenwand (10) nach Anspruch 7, **dadurch gekennzeichnet, dass** der Hintergreifungsabschnitt (5) von der Staukastenaußenwand (3) nach hinten ragt, um die Fahrerhaustüre (2), insbesondere den Türflansch (6), zu hintergreifen.

9. Seitenwand (10) nach einem der vorhergehenden Ansprüche, **dadurch gekennzeichnet, dass** im geschlossenen Zustand ein Randbereich der Außenfläche der Staukastenaußenwand (3) und ein Randbereich der Außenfläche der Fahrerhaustüre (1) und/oder der Seitenwand (10) mit einem Versatz von weniger als 10mm oder weniger als 5mm zueinander ausgerichtet sind.

10. Seitenwand (10) nach einem der vorhergehenden Ansprüche, **dadurch gekennzeichnet, dass** der Staukasten (2) kein eigenes Schloss aufweist, aber dennoch absperrbar ist, und/oder mit keinem Bowdenzug in Wirkverbindung steht.

11. Fahrerhaus für ein Nutzfahrzeug, vorzugsweise Lastkraftwagen, mit einer Seitenwand (10) nach einem der vorhergehenden Ansprüche

## Claims

1. Side wall (10) for a driver's cab of a utility vehicle, with a driver's cab door (1) and a storage box (2) which is arranged laterally next to the driver's cab door (1), is expediently accessible from outside the driver's cab, serves for storing goods and has a preferably pivotable storage box outer wall (3), **characterized in that**, in the closed state of the driver's cab door (1) and of the storage box outer wall (3), the driver's cab door (1) overlaps the storage box outer wall (3) in sections and therefore secures or blocks same against opening.

2. Side wall (10) according to Claim 1, **characterized in that** the storage box outer wall (3) is a storage box outer flap.

3. Side wall (10) according to Claim 1 or 2, **characterized in that**, for the opening of the storage box (2), the storage box outer wall (3) is pivotable about a pivot axis (4) extending in the vertical direction (H) of the side wall (10).

4. Side wall (10) according to one of the preceding claims, **characterized in that** the storage box outer wall (3) is arranged in the side wall (10) and/or the storage box (2) is accessible from the outside.

5. Side wall (10) according to one of the preceding claims, **characterized in that** the storage box outer wall (3) is pivotable relative to the side wall (10).

6. Side wall (10) according to one of the preceding claims, **characterized in that**, in the closed state of the driver's cab door (1) and of the storage box outer wall (3), the storage box outer wall (3) projects as far as and beyond a lateral door flange (6).

7. Side wall (10) according to one of the preceding claims, **characterized in that** the storage box outer wall (3) is provided with an engage-behind portion (5) which, in the closed state, is overlapped by a lateral door flange (6) and is therefore locked.

8. Side wall (10) according to Claim 7, **characterized in that** the engage-behind portion (5) projects rearwards from the storage box outer wall (3) in order to engage behind the driver's cab door (1), in particular the door flange (6).

9. Side wall (10) according to one of the preceding claims, **characterized in that**, in the closed state, an edge region of the outer surface of the storage box outer wall (3) and an edge region of the outer surface of the driver's cab door (1) and/or of the side wall (10) are aligned with each other with an offset of less than 10 mm or less than 5 mm.

10. Side wall (10) according to one of the preceding claims, **characterized in that** the storage box (2) does not have a dedicated lock, but can nevertheless be shut, and/or is not operatively connected to any Bowden cable.

11. Driver's cab for a utility vehicle, in particular lorry, with a side wall (10) according to one of the preceding claims.

## Revendications

1. Paroi latérale (10) pour une cabine de conducteur d'un véhicule utilitaire, comprenant une porte de cabine de conducteur (1) et un coffre de rangement (2) disposé latéralement à côté de la porte de cabine de conducteur (1), qui est accessible de manière judicieuse depuis l'extérieur de la cabine de conducteur, qui sert à ranger un chargement et qui présente une paroi extérieure (3) de coffre de rangement de préférence pivotante, **caractérisée en ce que** dans l'état fermé de la porte de cabine de conducteur (1) et de la paroi extérieure (3) du coffre de rangement, la porte de cabine de conducteur (1) recouvre en partie la paroi extérieure du coffre de rangement (3) et la protège ou la bloque ainsi contre une ouverture.

2. Paroi latérale (10) selon la revendication 1, **caractérisée en ce que** la paroi extérieure (3) du coffre de rangement est un volet extérieur du coffre de rangement.

3. Paroi latérale (10) selon la revendication 1 ou 2, **caractérisée en ce que** la paroi extérieure (3) du coffre de rangement peut pivoter autour d'un axe de pivotement (4) s'étendant dans la direction en hauteur (H) de la paroi latérale (10) pour ouvrir le coffre de rangement (2).

4. Paroi latérale (10) selon l'une quelconque des revendications précédentes, **caractérisée en ce que** la paroi extérieure (3) du coffre de rangement est disposée dans la paroi latérale (10) et/ou le coffre de rangement (2) est accessible depuis l'extérieur.

5. Paroi latérale (10) selon l'une quelconque des revendications précédentes, **caractérisée en ce que** la paroi extérieure (3) du coffre de rangement peut pivoter par rapport à la paroi latérale (10).

6. Paroi latérale (10) selon l'une quelconque des revendications précédentes, **caractérisée en ce que** dans l'état fermé de la porte de cabine de conducteur (1) et de la paroi extérieure (3) du coffre de rangement, la paroi extérieure (3) du coffre de rangement fait saillie jusqu'à une bride de porte latérale (6) et au-delà.

7. Paroi latérale (10) selon l'une quelconque des revendications précédentes, **caractérisée en ce que** la paroi extérieure (3) du coffre de rangement est pourvue d'une portion d'engagement par l'arrière (5) qui, dans l'état fermé, est recouverte et par conséquent verrouillée par une bride de porte latérale (6).

8. Paroi latérale (10) selon la revendication 7, **caractérisée en ce que** la portion d'engagement par l'arrière (5) fait saillie vers l'arrière depuis la paroi extérieure (3) du coffre de rangement afin de saisir par l'arrière la porte de cabine de conducteur (1), en particulier la bride de porte (6).

9. Paroi latérale (10) selon l'une quelconque des revendications précédentes, **caractérisée en ce que** dans l'état fermé, une région de bord de la surface extérieure de la paroi extérieure (3) du coffre de rangement et une région de bord de la surface extérieure de la porte de cabine de conducteur (1) et/ou de la paroi latérale (10) sont orientées avec un décalage inférieur à 10 mm ou inférieur à 5 mm l'une par rapport à l'autre.

10. Paroi latérale (10) selon l'une quelconque des revendications précédentes, **caractérisée en ce que** le coffre de rangement (2) ne présente pas de serrure propre, mais peut toutefois être bloqué, et/ou n'est en liaison fonctionnelle avec aucun câble Bowden.

11. Cabine de conducteur pour un véhicule utilitaire, de préférence un poids-lourd, comprenant une paroi latérale (10) selon l'une quelconque des revendications précédentes.
